# EUROPÄISCHE PATENTSCHRIFT

(11) **EP 0 976 694 B1**
(45) Veröffentlichungstag und Bekanntmachung des Hinweises auf die Patenterteilung: **24.03.2004**
(21) Anmeldenummer: 99114833.9
(22) Anmeldetag: 29.07.1999
(51) Int. Cl.: C04B 16/08

(54) **Wärmedämmender Leichtputz**
Insulating leightweight plaster
Enduit léger et isolant

(30) Priorität: 31.07.1998 DE 19834560
(43) Veröffentlichungstag der Anmeldung: 02.02.2000
(73) Patentinhaber: BASF AKTIENGESELLSCHAFT, 67056 Ludwigshafen (DE)
(72) Erfinder: Hahn, Klaus, Dr., 67281 Kirchheim (DE); Steinbrecher, Horst, 67354 Römerberg (DE); Lindhof, Werner, 67227 Frankenthal (DE)

(56) Entgegenhaltungen:
- EP-A- 0 470 455
- WO-A-92/10438
- DE-A- 3 345 550
- DE-U- 29 623 459
- GB-A- 1 263 340
- US-A- 4 011 355
- US-A- 4 040 855

## Beschreibung

Die Erfindung betrifft einen wärmedämmenden Leichtputz auf Basis von hydraulischen Bindemitteln und Zuschlägen aus Schaumpolystyrol-Partikeln.

Zur Herstellung von wärmedämmenden Leichtputzen sind Mischungen bekannt, deren Leichtzuschläge zum Teil aus Schaumpolystyrolteilchen bestehen. Diese Mischungen werden zweckmäßig als Trockenmischung hergestellt, wobei die Schaumstoffzuschläge, die hydraulischen Bindemittel und die sonstigen Zusätze gleichmäßig vermischt und dann abgepackt werden. An der Baustelle wird die Trockenmischung mit Wasser aufbereitet und verarbeitet.

Im allgemeinen werden die Schaumpolystyrolzuschläge in Form von runden Partikeln verwendet. Infolge ihrer statisch günstigen, runden Kornform und ihres elastischen Verhaltens können diese Partikeln den bei der maschinellen Verarbeitung (Verspritzen) der Putzmischung auftretenden Pressdruck in der Förderleitung ohne störenden Volumenverlust aufnehmen. Als nachteilig wirken sich jedoch die Perlform und die glatte Partikeloberfläche insofern aus, als die Trockenmischung zum Separieren und Agglomerieren des Leichtzuschlags neigt, eine gleichmäßige Bindemittelverteilung nicht möglich ist und somit störende Rohdichte- und Festigkeitsschwankungen auftreten. Eine Folge davon ist, daß nach dem Auftragen des Leichtputzes auf die Wand dort weiße Agglomerate von Schaumpartikeln in grauen Zementflächen sichtbar sind, was einen nachträglichen Anstrich erfordert, wenn man eine ästhetisch ansprechende, einheitliche Wandoberfläche erhalten will.

Aufgabe der Erfindung war es, einen Dämmputz bereitzustellen, bei dem die genannten Nachteile nicht auftreten.

Gegenstand der Erfindung ist ein wärmedämmender Leichtputz auf Basis von hydraulischen Bindemitteln und Zuschlägen aus Schaumpolystyrol-Partikeln, die mit einer Beschichtung versehen sind, welche - bezogen auf das Gewicht der Partikel - folgende Komponenten enthält:
A. 0,1 bis 5 % einer Metallseife,
B. 0,05 bis 2 % feinteilige Kieselsäure,
C. 0,005 bis 0,5 % eines Tensids.

Hydraulische Bindemittel sind die üblichen Putz- und Mauerbinder oder Mischbinder auf Zement- und Kalkbasis.

Geeignete Metallseifen A sind z.B. die Salze zweiwertiger Metalle mit gesättigten und ungesättigten Fettsäuren, wie Stearinsäure, Laurinsäure und Ethylhexansäure. Besonders bevorzugt sind Magnesium- und Zinkstearat. Sie sind in der Beschichtung in Mengen von 0,1 bis 5, vorzugsweise von 0,2 bis 2 Gew.-%, bezogen auf die Schaumpartikel, enthalten. Die Metallsalze sollen vor allem das Verkleben der Schaumpartikel verhindern.

Die feinteilige Kieselsäure B weist vorzugsweise eine Partikelgröße im Bereich von 5 bis 100 µm auf; sie wird in Mengen von 0,05 bis 2, insbesondere von 0,1 bis 1 Gew.-%, bezogen auf die Schaumpartikel, eingesetzt. Sie soll die wässrige Lösung der Tenside aufnehmen und dadurch eine gleichmäßige Vermischung mit dem Metallsalz A ermöglichen.

Geeignete Tenside C sind z.B. Alkylsulfonate, Polyether, wie Polyethylenoxide und Polypropylenoxide, ferner Alkylethersulfate und Alkylethersulfonate. Ein bevorzugtes Tensid ist das Spülmittel K 8 des CV Chemievertriebs Hannover, welches als Hauptkomponenten ein Alkylbenzolsulfonat sowie ein Polyethylenoxid enthält. Die Tenside sind in der Beschichtung in Mengen von 0,005 bis 0,5 Gew.-%, insbesondere von 0,01 bis 0,1 Gew.-% enthalten. Sie bewirken ein gleichmäßiges Verschäumen der expandierbaren Polystyrolpartikel, so daß Schaumpartikel mit homogener Schüttdichte entstehen. Darüber hinaus verhindern sie die Kranzbildung im Vorschäumer bei der Herstellung der Schaumpartikel.

Darüber hinaus kann die Beschichtung weitere Komponenten, wie z.B. Antistatika und Flammschutzmittel enthalten.

Zur Herstellung der Beschichtung wird zweckmäßigerweise zuerst das Tensid, das als wässrige, z.B. 10%ige Lösung vorliegt, auf das Kieselsäurepulver aufgebracht und damit vermischt, dann wird die Mischung mit der festen Metallseife verrührt. Die fertige Beschichtung wird schließlich auf die expandierbaren, treibmittelhaltigen Polystyrolperlen, z.B. mittels eines Schaufelmischers aufgetrommelt.

Das Verschäumen der beschichteten Polystyrolperlen erfolgt auf üblichen Vorschäumaggregaten unter üblichen Bedingungen.

Die Schaumpolystyrol-Partikel sind vorgeschäumte Partikel mit einer Schüttdichte von 5 bis 25, vorzugsweise 7 bis 15 g·l⁻¹ und einer mittleren Partikelgröße von 0,3 bis 3, vorzugsweise 0,6 bis 2 mm.

Zur Herstellung des Dämmputzes werden Bindemittel und Schaumpartikel in üblichen Schaufelmischern in einem solchen Verhältnis vermischt, daß nach dem Anrühren mit Wasser an der Baustelle im Dämmputz 1 bis 90, vorzugsweise 10 bis 70 und insbesondere 20 bis 50 Vol.-% Schaumpartikel-Schüttung enthalten sind.

## Patentansprüche

1. Wärmedämmender Leichtputz auf Basis von hydraulischen Bindemitteln und Zuschlägen aus Schaumpolystyrol-Partikeln, **dadurch gekennzeichnet, daß** die Schaumpartikel mit einer Beschichtung versehen sind, welche - bezogen auf das Gewicht der Partikel - folgende Komponenten enthält:
A. 0,1 bis 5 % einer Metallseife,
B. 0,05 bis 2 % feinteilige Kieselsäure,
C. 0,005 bis 0,5 % eines Tensids.

2. Leichtputz nach Anspruch 1, **dadurch gekennzeichnet, daß** die hydraulischen Bindemittel Putz- und Mauerbinder oder Mischbinder auf Kalk- und Zementbasis sind.

3. Leichtputz nach Anspruch 1, **dadurch gekennzeichnet, daß** die Schaumpartikel eine Schüttdichte von 5 bis 25 g · l⁻¹ und eine mittlere Partikelgröße von 0,3 bis 3 mm haben.

## Claims

1. A thermally insulating lightweight render based on hydraulic binders and on aggregates composed of polystyrene foam particles, wherein the foam particles have a coating which - based on the weight of the particles - comprises the following components:
A. from 0.1 to 5% of a metal soap,
B. from 0.05 to 2% of fine-particle silica,
C. from 0.005 to 0.5% of a surfactant.

2. A lightweight render as claimed in claim 1, wherein the hydraulic binders are render binders and masonry binders or mixed binders based on lime and on cement.

3. A lightweight render as claimed in claim 1, wherein the foam particles have a bulk density of from 5 to 25 g · l⁻¹ and an average bead size of from 0.3 to 3 mm.

## Revendications

1. Enduit léger thermiquement isolant à base de liants hydrauliques et d'agrégats à base de particules de polystyrène mousse, **caractérisé en ce que** les particules de mousse sont pourvues d'un revêtement qui, par rapport au poids des particules, contient les composants suivants :
A. 0,1 à 5% d'un savon métallique,
B. 0,05 à 2% d'acide silicique finement divisé,
C. 0,005 à 0,5% d'un agent tensioactif.

2. Enduit léger suivant la revendication 1, **caractérisé en ce que** les liants hydrauliques sont des liants pour enduction et maçonnerie ou des liants mixtes à base de chaux et de ciment.

3. Enduit léger suivant la revendication 1, **caractérisé en ce que** les particules de mousse présentent une masse volumique apparente de 5 à 25 g·l⁻¹ et une taille moyenne des particules de 0,3 à 3 mm.
